# EUROPÄISCHE PATENTSCHRIFT

(11) **EP 0 879 720 B1**
(45) Veröffentlichungstag und Bekanntmachung des Hinweises auf die Patenterteilung: **29.10.2003**
(21) Anmeldenummer: 98109174.7
(22) Anmeldetag: 20.05.1998
(51) Int. Cl.: B60J 5/04

(54) **Seitenaufprallschutz**
Side impact protection
Protection en cas de choc latéral

(30) Priorität: 23.05.1997 DE 19721607
(43) Veröffentlichungstag der Anmeldung: 25.11.1998
(73) Patentinhaber: DaimlerChrysler AG, 70567 Stuttgart (DE)
(72) Erfinder: Eipper, Konrad, 72108 Rottenburg (DE); Hicken, Sven, 81827 München (DE)

(56) Entgegenhaltungen:
- EP-A- 0 236 291
- DE-A- 4 443 840
- US-A- 3 868 796
- US-A- 3 964 208
- US-A- 5 611 568
- "Bis in die poren, leichtbau aluminiumschaum" AUTOMOBIL INDUSTRIE, Nr. 4, 1994, Seite 76 XP002161649

## Beschreibung

Die Erfindung betrifft einen Seitenaufprallschutz in Fahrzeugtüren von Fahrzeugkarosserien der im Oberbegriff des Patentanspruchs 1 angegebenen Gattung.

Bei einem bekannten Seitenaufprallschutz (DE 92 10 257 U1) ist ein mit einer Füllung aus Aluminiumschaum ausgesteiftes Aufprallhohlprofil in Längsrichtung des Fahrzeugs in der Fahrzeugtür eingebaut. Die Füllung ist mit der Innenwand des Hohlprofils ganz oder bereichsweise fest verbunden. Dadurch wird bei leichter Bauweise ein hoher Verformungswiderstand des Seitenaufprallschutzes erzielt, der dem einer massiven Stange nahezu gleich ist. Durch bereichsweise Änderung der Porengröße des Aluminiumschaums und/oder der Schaumdichte kann die Verformung erheblich beeinflußt werden.

Bei einem ebenfalls bekannten Seitenaufprallschutz (GB 1 583 852 C1) ist zwischen der Außenhaut und dem Innenblech der Tür ein plastisch verformbares Absorptionselement aus Polyurethan vorgesehen. Die Tür ist in dem Bereich des Sitzkissenträgers des Fahrzeugsitzes besonders dick ausgeführt, so daß dieser Bereich bei geschlossener Fahrzeugtür sehr nahe an dem Sitzkissenträger liegt. Das Absorptionselement erstreckt sich über den gesamten Türbereich in Höhe der Stoßstange eines evtl. seitlich auffahrenden Gegenfahrzeugs. Im Crashfall wird durch das Absorptionselement die gesamte vorhandene Distanz zwischen der Türaußenhaut und der Seite des Fahrzeugsitzes für die Deformation und damit für den Energieabbau ausgenutzt, bevor das Gegenfahrzeug mit dem Fahrzeugsitz in Berührung kommt.

Bei einem weiterhin bekannten Seitenaufprallschutz (DE 195 21 888 A1) ist in der unteren Hälfte des Sitzlehnenteils ein trapezförmiger Strebenrahmen eingebaut, dessen kürzere Rahmenabschnitte aus den Schmalseiten des Lehnenteils herausstehen und eine winkelsteife Prallfläche bilden. Die eine der beiden Prallflächen liegt einer auf dem Mitteltunnel befestigten drucksteifen Prallbox und die andere der Prallflächen einem an der Fahrzeugtür angeordneten Hartschaumkörper gegenüber. Beim Seitenaufprall wird die Außenhaut der Fahrzeugtür und das Versteifungsprofil intrudiert und das Versteifungsprofil stützt sich nach dem Prinzip des dreifach gelagerten Biegeträgers zwischen seinen Einspannstellen in der Fahrzeugtür über den Hartschaumkörper an dem Strebenrahmen ab, der sich seinerseits an der Prallbox auf dem Mitteltunnel abstützt.

Bei einer bekannten Kraftfahrzeugtür (DE 34 25 778 C1) ist der vor dem karosserieseitigen Türschweller liegende untere Bereich der Fahrzeugtür zwischen deren Außenhaut und Innenblech mit einem stoßabsorbierenden Schaumkörperblock aus Kunststoffhartschaum ausgeschäumt oder mittels eingelegter stoßabsorbierender Schaumformteile aufgefüllt, um auf die Fahrzeugtür wirkende Rammstöße zu dämpfen.

Im Automobilbau ist es ferner bekannt, zur Gewichtseinsparung einen zur zellularen Struktur aufgeschäumten Aluminiumwerkstoff in einer Formteilevielfalt einzusetzen ("Bis in die Poren", Leichtbau Alumiuniumschaum, Automobil Industrie 4/94, Seite 76).

Aus der US 3,868,796 geht ein Seitenaufprallschutz in Fahrzeugtüren mit einer Außenhaut hervor, wobei in der Fahrzeugtür ein energieabsorbierendes Schaumelement und ein die Fahrzeugtür längsdurchziehendes Versteifungsprofil untergebracht ist.

Der Erfindung liegt die Aufgabe zugrunde, einen Seitenaufprallschutz der eingangs genannten Art zu schaffen, der sich gut in die Türstruktur der Fahrzeugtür einfügen läßt, keine voluminösen Einbauräume erfordert und eine hohe Energieaufnahme besitzt.

Die Aufgabe ist bei einem Seitenaufprallschutz der im Oberbegriff des Patentanspruchs 1 definierten Gattung erfindungsgemäß durch die Merkmale im Kennzeichenteil des Patentanspruchs 1 gelöst.

Der erfindungsgemäße Seitenaufprallschutz nutzt den Vorteil des hohen Energieabsorptionsvermögens von Metallschaum für einen zuverlässigen Schutz gegen seitliche Stöße aus, ohne das Gewicht der Türen durch Einziehen zusätzlicher Profile und Versteifungen unnötig zu erhöhen. Der im schmelzmetallurgischen - und nicht im pulvermetallurgischen - Verfahren hergestellte Metallschaum hat einen Dichtebereich zwischen 0,1 und 0,3 g/cm³ und besitzt damit ein extrem gutes Deformationsverhalten. Das Schaumelement ist den Konturen der Fahrzeugtür angepaßt und nutzt in der Fahrzeugtür vorhandene drucksteife Strukturen zur Abstützung im Crashfall aus, um so seine hohe Energieaufnahmekapazität voll auszuschöpfen. Zur Unterbringung des Schaumelements, das alternativ als aufgeschäumter Formkörper eingebaut oder in vorhandene Strukturen in der Fahrzeugtür direkt eingeschäumt werden kann, werden in der Fahrzeugtür ohnehin vorhandene Hohlräume ausgenutzt, so daß trotz wesentlich verbesserter Widerstandsfähigkeit der Fahrzeugtür gegen seitliche Stöße deren Volumen nicht aus Sicherheitsgründen zunehmen muß. Im Fall der Herstellung des Schaumelements als aufgeschäumter Formkörper zum separaten Einbau wird die Oberfläche des Formkörpers geschlossenporig ausgefürt, was durch eine geeignete Prozeßführung beim Schäumvorgang erreicht wird. Alternativ kann der Formkörper auch mit einer Ummantelung, z.B. aus Kunststoff, versehen werden.

Zweckmäßige Ausführungsformen des erfindungsgemäßen Seitenaufprallschutzes mit vorteilhaften Weiterbildungen und Verbesserungen der Erfindung sind in den weiteren Patentansprüchen angegeben.

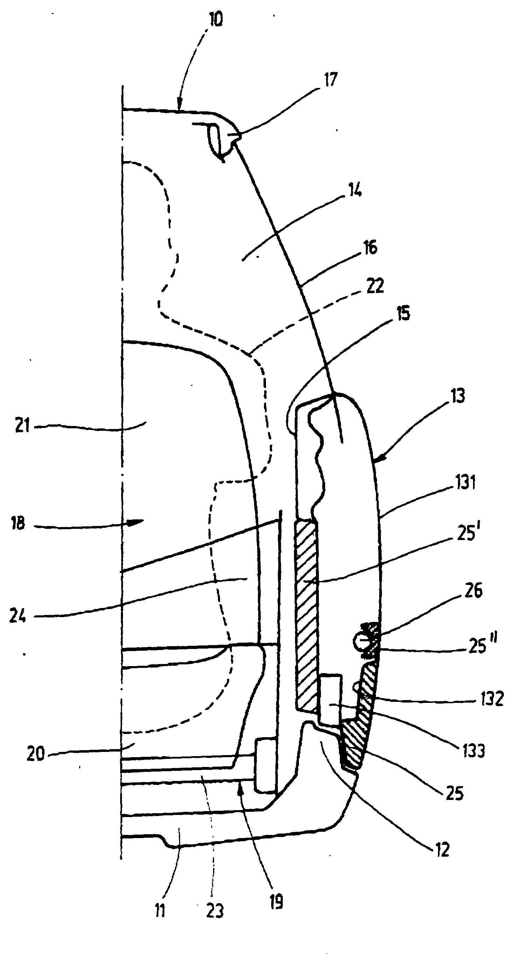

Die Erfindung ist anhand von in der Zeichnung dargestellten Ausführungsbeispielen im folgenden näher beschrieben. Dabei zeigt die Zeichnung ausschnittweise einen Querschnitt durch eine Fahrzeugkarosserie im Bereich der Fahrzeugtür, schematisch dargestellt.

In der Zeichnung ist mit 10 die Fahrzeugkarosserie eines Personenkraftwagens schematisch angedeutet, deren als Hohlteil ausgeführter Karosserieboden auf jeder Längsseite einstückig einen sog. Türschweller 12 bildet. Die mit 13 bezeichnete Fahrzeugtür weist eine Außenhaut 131 und ein Innenblech 132 sowie einen Innenträger 133 auf und ist an ihrer dem Karosserieinnenraum 14 zugekehrten Innenseite mit einer Türverkleidung 15 abgedeckt. In der Fahrzeugtür 13 ist eine Seitenscheibe 16 eines Seitenfensters verschieblich geführt, die bei geschlossenem Seitenfenster mit ihrer Oberkante am Dachprofil 17 der Fahrzeugkarosserie 10 anliegt.

Auf dem Karosserieboden 11 ist ein Fahrzeugsitz 18 befestigt, der in Querrichtung der Karosserie 10 drucksteif ausgebildet ist. Von dem Fahrzeugsitz 18 ist mit 19 ein am Karosserieboden 11 befestigtes Sitzuntergestell, mit 20 ein Sitzkissen und mit 21 eine Rückenlehne angedeutet. Eine auf dem Pahrzeugsitz 18 plazierte Person 22 ist strichliniert dargestellt. Der Druckversteifung des Sitzuntergestells 19 dienen zwei Querstreben 23, von denen in der Zeichnung die hintere Querstrebe 23 zu sehen ist, sowie eine Querversteifungsstruktur 24, die teilweise in die Rückenlehne hineinragt und bei geschlossener Fahrzeugtür 13 bis nahe an die Türverkleidung 15 reicht.

Die Fabrzeugtür 13 ist mit einem Seitenaufprallschutz versehen, der in der Zeichnung in verschiedenen Ausführungsbeispielen dargestellt ist. In allen Ausführungsbeispielen ist der Seitenaufprallschutz durch ein energieabsorbierendes Schaumelement verwirklicht, das aus Aluminiumschaum hergestellt und den Konturen des Einbauraums in der Fahrzeugtür 13 angepaßt ist. Das Schaumelement ist dabei in der Fahrzeugtür 13 so angeordnet, daß seine von der Außenhaut 131 der Fahrzeugtür 13 abgekehrte Rückseite an einer drucksteifen Struktur der Fahrzeugkarosserie 10 oder Fahrzeugtür 13 abgestützt ist oder im Crashfall sofort abgestützt wird.

In einem ersten Ausführungsbeispiel ist das Schaumelement 25 zwischen vorhandenen Strukturen in der Fahrzeugtür 13 eingeschäumt. In dem in der Zeichnung dargestellten Ausführungsbeispiel werden die türseitigen Strukturen einerseits von der Außenhaut 131 und andererseits von einem Innenblech 132 der Fahrzeugtür gebildet, das bei geschlossener Fahrzeugtür 13 den Türschweller 12 teilweise überdeckt und an diesem anliegt. Zusätzlich könnte auch noch das Schaumelement 25 in dem Hohlraum vor dem Innenträger 133 der Fahrzeugtür 13 oder zwischen Außenhaut 131 und Innenträger 133 eingeschäumt werden.

Das mit 25' bezeichnete Schaumelement als weiteres Ausführungsbeispiel für die Realisierung des Seitenaufprallschutzes in der Fahrzeugtür 13 ist als vorgefertigter Formkörper aufgeschäumt und in die Fahrzeugtür 13 eingesetzt. Durch eine geeignete Prozeßführung beim Aufschäumungsvorgang ist der Formkörper mit einer geschlossenporigen Oberfläche hergestellt. Alternativ kann der aufgeschäumte Formkörper auch mit einer Ummantelung aus Kunststoff versehen werden. Zugleich werden beim Schäumungsprozeß hier nicht dargestellte Befestigungselemente zur Festlegung im Türinnern mit angeschäumt. In dem in der Zeichnung dargestellten Ausführungsbeispiel des Schaumelements 25' ist der Formkörper an der Innenseite der Türverkleidung 15 so befestigt, daß er mit geringem Abstand vor dem in Querrichtung drucksteif ausgebildeten Fahrzeugsitz 18 liegt. Im Crashfall wird der Spalt zwischen der Querversteifungstruktur 24 des Fahrzeugsitzes 18 und dem Schaumelement 25' durch Einbiegen der Fahrzeugtür 13 schnell überwunden, und das Schaumelement 25' stützt sich an dem Fahrzeugsitz 18 ab. Im weiteren Verlauf der Kraftwirkung wird nunmehr das Schaumelement 25 zusammengedrückt und baut dabei die gesamte Stoßenergie definiert ab.

In einem dritten Ausführungsbeispiel des Seitenaufprallschutzes stützt sich das Schaumelement 25" an einem Versteifungs- oder Aufprallhohlprofil 26 ab, das in bekannter Weise in Karosserielängsrichtung durch die Fahrzeugtür 13 hindurchgezogen ist. Das Schaumelement 25" kann dabei entweder als vorgefertigter Formkörper ausgebildet sein, der zwischen der Außenhaut 131 der Fahrzeugtür 13 und dem Hohlprofil 26 eingesetzt wird, oder kann unmittelbar zwischen der Außenhaut 131 und dem Hohlprofil 26 eingeschäumt werden.

Die Erfindung ist nicht auf die beschriebenen Ausführungsbeispiele beschränkt. So können die Schaumelemente 25,25',25'' auch aus anderen Metallschäumen oder aus Schäumen von Metallegierungen hergestellt werden, wobei bevorzugt auf Schäume von Leichtmetallen und deren Legierungen zurückgegriffen wird.

## Patentansprüche

1. Seitenaufprallschutz in Fahrzeugtüren (13) von Fahrzeugkarosserien mit einer Außenhaut (131), mit einem die Fahrzeugtür längsdurchziehenden Versteifungsprofil und mit einem in der Fahrzeugtür angeordneten energieabsorbierenden Schaumelement,
**dadurch gekennzeichnet,**
**dass** das Versteifungsprofil ein Hohlprofil (26) ist und das Schaumelement (25") aus Metallschaum, vorzugsweise Aluminiumschaum, hergestellt und zwischen der Außenhaut (131) der Fahrzeugtür (13) und dem Hohlprofil (26) so angeordnet ist, dass seine von der Außenhaut (131) der Fahrzeugtür (13) abgekehrte Rückseite an dem Hohlprofil (26) abgestützt ist.

2. Seitenaufprallschutz nach Anspruch 1,
**dadurch gekennzeichnet,**
**daß** das Schaumelement (25) zwischen vorhandenen Strukturen in der Pahrzeugtür eingeschäumt ist.

3. Seitenaufprallschutz nach Anspruch 1,
**dadurch gekennzeichnet,**
**daß** das Schaumelement (25'') als vorgefertigter Formkörper aufgeschäumt und in die Fahrzeugtür (13) eingesetzt ist.

4. Seitenaufprallschutz nach Anspruch 3,
**dadurch gekennzeichnet,**
**daß** die Oberfläche des Formkörpers geschlossenporig ausgebildet ist.

5. Seitenaufprallschutz nach Anspruch 3 oder 4,
**dadurch gekennzeichnet,**
**daß** der Formkörper ganz- oder teilweise mit einer Ummantelung versehen ist.

6. Seitenaufprallschutz nach einem-der Ansprüche 3 - 5,
**dadurch gekennzeichnet,**
**daß** an dem Formkörper Befestigungselemente einstückig angeschäumt sind.

## Claims

1. Side impact protection in vehicle doors (13) of vehicle bodyworks with an outer shell (131) with a reinforcement profile pulling the vehicle door longitudinally and with an energy absorbing foam element arranged in the vehicle door
**characterised in that**
the reinforcement profile is a hollow profile (26) and the foam element (25'') is made from metal foam, preferably aluminium foam and arranged between the outer shell (131) of the vehicle door (13) and the hollow profile (26) in such a way that its rear side which is turned away from the outer shell (131) of the vehicle door (13) is supported on the hollow profile (26).

2. Side impact protection according to claim 1
**characterised in that**
the foam element (25) is foamed in between existing structures in the vehicle door.

3. Side impact protection according to claim 1
**characterised in that**
the foam element (25'') is foamed up as a premanufactured shaped body and incorporated into the vehicle door (13).

4. Side impact protection according to claim 3
**characterised in that**
the upper surface of the shaped body is formed with closed pores.

5. Side impact protection according to claim 3 or 4
**characterised in that**
the shaped body is provided fully or partly with a case.

6. Side impact protection according to one of the claims 3 - 5
**characterised in that**
fixing elements are foamed in on the shaped body in a one component way.

## Revendications

1. Protection en cas de choc latéral sur les portes de véhicule (13) de carrosseries automobiles avec une enveloppe extérieure (131), avec un profil de renfort traversant la porte du véhicule dans la longueur et avec un élément en mousse absorbant l'énergie disposé dans la porte du véhicule
**caractérisé en ce que**
le profil de renfort est un profilé creux (26) et l'élément en mousse (25") est fabriqué à base de mousse de métal, de préférence de la mousse d'aluminium et est disposé entre l'enveloppe extérieure (131) de la porte du véhicule (13) et le profilé creux (26) de telle sorte que son côté arrière, opposé à l'enveloppe extérieure (131) de la porte du véhicule (13), est soutenu sur le profilé creux (26).

2. Protection en cas de choc latéral selon la revendication 1,
**caractérisé en ce que**
l'élément en mousse (25) est moussé à l'intérieur entre des structures existantes dans la porte du véhicule.

3. Protection en cas de choc latéral selon la revendication 1,
**caractérisé en ce que**
l'élément en mousse (25") est moussé dessus en tant que corps moulé préfabriqué et est inséré dans la porte du véhicule (13).

4. Protection en cas de choc latéral selon la revendication 3,
**caractérisé en ce que**
la surface du corps moulé est conçue avec des pores fermés.

5. Protection en cas de choc latéral selon la revendication 3 ou 4,
**caractérisé en ce que**
le corps moulé est pourvu tout ou partiellement d'une enveloppe.

6. Protection en cas de choc latéral selon l'une quelconque des revendications 3 à 5,
**caractérisé en ce que**
des éléments de fixation sont moussés d'une seule pièce sur le corps moulé.
